# EUROPÄISCHE PATENTSCHRIFT

(11) **EP 1 339 947 B1**
(45) Veröffentlichungstag und Bekanntmachung des Hinweises auf die Patenterteilung: **27.07.2005**
(21) Anmeldenummer: 01998714.8
(22) Anmeldetag: 06.11.2001
(51) Int. Cl.: E21B 37/06, C10L 3/00, C10L 1/10, C08F 220/26, C08F 226/00

(54) **ADDITIVE ZUR INHIBIERUNG DER GASHYDRATBILDUNG**
ADDITIVE FOR INHIBITING THE FORMATION OF GAS HYDRATES
ADDITIFS DESTINES A INHIBER LA FORMATION D'HYDRATE GAZEUX

(30) Priorität: 01.12.2000 DE 10059816
(43) Veröffentlichungstag der Anmeldung: 03.09.2003
(73) Patentinhaber: Clariant GmbH, 65929 Frankfurt am Main (DE)
(72) Erfinder: DAHLMANN, Uwe, 69126 Heidelberg (DE); FEUSTEL, Michael, 55278 Köngernheim (DE); KAYSER, Christoph, 55127 Mainz (DE); MORSCHHÄUSER, Roman, 55122 Mainz (DE)
(74) Vertreter: Mikulecky, Klaus, Dr.
(86) Internationale Anmeldenummer: PCT/EP2001/012811
(87) Internationale Veröffentlichungsnummer: WO 2002/044519

(56) Entgegenhaltungen:
- EP-A- 0 896 123
- WO-A-96/41784
- WO-A-96/41786
- WO-A-98/23843
- US-A- 5 848 644

## Beschreibung

Die vorliegende Erfindung betrifft ein Additiv und ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge eines Inhibitors zugegeben wird, der Kammpolymere von Alkylpolyoxyalkylenacrylaten enthält.

Gashydrate sind kristalline Einschlussverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst ist thermodynamisch instabil und wird erst durch die Einbindung von Gastmolekülen stabilisiert. Diese eisähnlichen Verbindungen können in Abhängigkeit von Druck und Gaszusammensetzung auch über den Gefrierpunkt von Wasser (bis über 25°C) hinaus existieren.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Ergasförderung stellt die Existenz dieser Gashydrate ein großes Problem dar, besonders dann, wenn Nassgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung verschiedenster Fördereinrichtungen, wie Pipelines, Ventilen oder Produktionseinrichtungen, in denen über längere Strecken bei niedrigeren Temperaturen Nassgas oder Mehrphasengemische transportiert werden, wie dies speziell in kälteren Regionen der Erde oder auf dem Meeresboden vorkommt.

Außerdem kann die Gashydratbildung auch beim Bohrvorgang zur Erschließung neuer Gas- oder Erdöllagerstätten bei entsprechenden Druck- und Temperaturverhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (mehr als 10 Gew.-% bezüglich des Gewichts der Wasserphase) niederen Alkoholen, wie Methanol, Glykol, oder Diethylenglykol unterdrückt werden. Der Zusatz dieser Additive bewirkt, dass die thermodynamische Grenze der Gashydratbildung zu niedrigeren Temperaturen und höheren Drücken hin verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, indem man bei Temperatur- und Druckbereichen, in denen sich Gashydrate bilden können, Additive in Mengen bis 2 Gew.-% zusetzt, die die Gashydratbildung entweder zeitlich hinauszögern (kinetische Inhibitoren) oder die Gashydratagglomerate klein und damit pumpbar halten, so dass diese durch die Pipeline transportiert werden können (sog. Agglomerat-Inhibitoren oder Anti-Agglomerates). Die dabei eingesetzten Inhibitoren behindern dabei entweder die Keimbildung und/oder das Wachstum der Gashydratpartikel, oder modifizieren das Hydratwachstum derart, dass kleinere Hydratpartikel resultieren.

Als Gashydratinhibitoren wurden in der Patentliteratur neben den bekannten thermodynamischen Inhibitoren eine Vielzahl monomerer sowie polymerer Substanzklassen beschrieben, die als kinetische Inhibitoren oder Agglomeratinhibitoren wirken. Von besonderer Bedeutung sind hierbei Polymere mit Kohlenstoff-Backbone, die in den Seitengruppen sowohl cyclische (Pyrrolidon- oder Caprolactamreste) als auch acyclische Amidstrukturen enthalten.

So werden in WO-94/12761 ein Verfahren zur kinetischen Inhibierung der Gashydratbildung durch die Verwendung von Polyvinyllactamen mit einem Polymergewicht von M_{W} > 40.000 D, und in WO-93/25798 ein solches Verfahren unter Verwendung von Polymeren und/oder Copolymeren des Vinylpyrrolidons mit einem Polymergewicht von M_{W} > 5.000 bis 40.000 D beschrieben.

EP-A-0 896 123 offenbart Gashydratinhibitoren, die Copolymere aus alkoxylierter (Meth)Acrylsäure ohne Alkyl-Endverkappung und cyclischen N-Vinylverbindungen enthalten können.

Die beschriebenen Additive besitzen nur eingeschränkte Wirksamkeit als kinetische Gashydratinhibitoren und/oder Anti-Agglomerates, oder sind nicht in ausreichender Menge oder nur zu hohen Preisen erhältlich.

Um Gashydratinhibitoren auch bei stärkerer Unterkühlung als zur Zeit möglich, d.h. weiter innerhalb der Hydratregion einsetzen zu können, bedarf es einer weiteren Wirkungssteigerung im Vergleich zu den Hydratinhibitoren des Standes der Technik. Zusätzlich sind in Bezug auf ihre biologische Abbaubarkeit und Toxizität verbesserte Produkte erwünscht.

Aufgabe der vorliegenden Erfindung war es also, verbesserte Additive zu finden, die sowohl die Bildung von Gashydraten verlangsamen (kinetische Inhibitoren) als auch Gashydratagglomerate klein und pumpbar halten (Anti-Agglomerates), um so ein breites Anwendungsspektrum mit hohem Wirkpotential zu gewährleisten. Des weiteren sollten die derzeit verwendeten thermodynamischen Inhibitoren (Methanol und Glykole), die beträchtliche Sicherheitsprobleme und Logistikprobleme verursachen, durch neue Additve ersetzt werden.

Wie nun überraschenderweise gefunden wurde, eignen sich sowohl wasserlösliche als auch öllösliche Kammpolymere, die auf alkoxyalkylsubstituierter (Meth)Acrylsäure aufgebaut sind, als Gashydratinhibitoren. Die Produkte können je nach Struktur sowohl die Keimbildung und Wachstum von Gashydraten verzögern (kinetische Gashydratinhibitoren) als auch die Agglomeration von Gashydraten unterdrücken (Agglomerat-Inhibitoren).

Gegenstand der Erfindung ist daher die Verwendung von Polymeren, enthaltend zwischen 1 und 100 mol-% Struktureinheiten der Formel 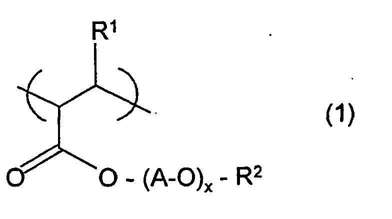 worin
- R¹: Wasserstoff oder C₁-C₆-Alkyl,
- R²: C₁-C₂₄-Alkyl, C₂-C₂₄-Alkenyl oder ein C₆-C₁₈-Arylrest, der mit einer C₁-C₁₂-Alkylgruppe substituiert sein kann,
- A: gleichartige oder verschiedene C₂-C₄-Alkylenreste und,
- x: eine ganze Zahl von 2-40 bedeuten,
in Mengen von 0,01 bis 2 Gew.-%, bezogen auf die Wasserphase, als Gashydratinhibitoren.

Neben den Struktureinheiten der Formel 1 können die erfindungsgemäßen Polymere, sofern sie nicht zu 100 mol-% aus den Struktureinheiten der Formel 1 bestehen, weitere Struktureinheiten enthalten. Bei diesen Struktureinheiten handelt es sich um solche, die von olefinisch ungesättigten Monomeren abgeleitet sind, welche O, N, S oder P enthalten. Bevorzugt enthalten die Polymere sauerstoff-, schwefel- oder stickstoffhaltige Comonomere, insbesondere sauerstoff- oder stickstoffhaltige.

Geeignete Monomere, die mit den Struktureinheiten gemäß Formel 1 copolymerisierbar sind, sind unter anderem Styrolsulfonsäure, Acrylamidopropylmethylensulfonsäure (AMPS), Vinylsulfonsäure, Vinylphosphonsäure, Allylsulfonsäure, Methallylsulfonsäure, Acrylsäure, Methacrylsäure und Maleinsäure (und deren Anhydrid) sowie die Salze der im vorangegangenen erwähnten Säuren mit ein- und zweiwertigen Gegenionen zu nennen. Bevorzugt angewendet werden als Gegenionen Lithium, Natrium, Kalium, Magnesium, Calcium, Ammonium, Monoalkylammonium, Dialkylammonium, Trialkylammonium oder Tetraalkylammonium, worin die Alkylsubstituenten der Ammoniumionen unabhängig voneinander C₁ bis C₂₂-Alkylreste darstellen, die mit 0 bis 3 Hydroxyalkylgruppen besetzt sein können, deren Alkylkettenlänge in einem Bereich von C₂ bis C₁₀ variieren kann. Zusätzlich können auch ein- bis dreifach ethoxylierte Ammoniumverbindungen mit unterschiedlichem Ethoxylierungsgrad Anwendung finden. Besonders bevorzugt werden Natrium und Ammonium als Gegenionen. Der Neutralisationsgrad der Molfraktion der im vorangegangenen beschriebenen Säuren kann auch von 100 % abweichen. Geeignet sind alle Neutralisationsgrade zwischen 0 und 100 %, besonders bevorzugt ist der Bereich zwischen 70 und 100 %.

Weiterhin kommen als geeignete Monomere Ester der Acryl- bzw. der Methacrylsäure mit aliphatischen, aromatischen oder cycloaliphatischen Alkoholen mit einer Kohlenstoffzahl von C₁ bis C₂₂ in Frage. Weitere geeignete Monomere sind 2- und 4-Vinylpyridin, Vinylacetat, Methacrylsäureglycidylester, Acrylnitril, Vinylchlorid, Vinylidenchlorid, Tetrafluorethylen und DADMAC.

Die Polymere enthaltend Struktureinheiten der Formel (1) sind durch die Polymerisation alkoxyalkylierter (Meth)Acrylsäure zugänglich. Letztere sind aus entsprechenden Polyoxyalkylenglycolen durch Umesterung mit entsprechend ungesättigten Carbonsäureestern, wie Acryl- oder Methacrylsäureestern, erhältlich.

Beispiele für Basisprodukte geeigneter Polyoxyalkylenglycole sind Verbindungen mit Molekulargewichten von 100-1000 g/mol, Ethylenoxid/Propylenoxid-Mischpolymerisate (Block- oder statistische Copolymere), Methylpolyglycole, Butylpolyglycole, Isobutylpolyglycole, aber auch Glykolether auf Basis Octanol, 2-Ethylhexanol, Decanol, Isodecanol, Dodecanol, Tetradecanol, Hexadecanol, Octadecanol, Oleylalkohol und synthetischer oder nativer Fettalkoholschnitte.

Geeignet sind ebenfalls Glykolether auf Basis von Alkylphenolen mit C₁-C₁₂-Alkylsubstituenten.

R¹ steht in einer bevorzugten Ausführungsform der Erfindung für Wasserstoff oder Methyl.

A steht für eine oder verschiedene C₂-C₄-Alkylengruppen. Das heißt, dass die Struktureinheiten der Formel 1 mit bis zu 40 C₂-C₄-Alkoxyeinheiten alkoxyliert sein können, wobei es sich dabei sowohl um eine reine Ethoxylierung, Propoxylierung oder Butoxylierung handeln kann, oder um eine Mischalkoxylierung. Vorzugsweise handelt es sich bei A um eine Ethylen- oder Propylengruppe, insbesondere um eine Ethylengruppe. Bei Mischalkoxylierung ist ein Verhältnis von Ethoxy-:Propoxygruppen von 5:35 bis 35:5 bevorzugt.

Die erfindungsgemäß zu verwendenden Polymere enthalten vorzugsweise 5 bis 95, insbesondere 20 bis 80 mol-% Struktureinheiten der Formel (1).

In Abhängigkeit von der Struktur der Struktureinheit gemäß Formel (1) lassen sich die Eigenschaften der Polymere derart modifizieren, dass sie gezielt, entsprechend den gegebenen Bedingungen, als spezifische Additive die Gashydratbildung hemmen können.

Bei kurzem Alkylrest R² (ca. C₁-C₈) bzw. bei hohem Ethylenoxidgehalt erhält man wasserlösliche Produkte, die die Keimbildung der Gashydrate unterdrücken und als kinetische Inhibitoren wirken, bzw. die Wirkung anderer kinetischer Inhibitoren als synergistische Komponenten verstärken können, wie in den beigefügten Beispielen gezeigt wird. Unter wasserlöslich werden hier solche Stoffe verstanden, von denen mindestens 5 g in 1 I Wasser klar löslich sind.

Bei längerem Alkylrest R² (ca. C₈-C₂₄) bzw. bei geringeren Gehalten an Ethylenoxid oder bei Verwendung von Propylenoxid oder Butylenoxid erhält man hydrophobere/lipophilere, bedingt öllösliche Kammpolymere mit tensidischem Charakter, die die Oberfläche von Gashydratpartikeln mit Öl benetzen und damit die Zusammenlagerung der Hydrate behindern. Sie fungieren somit als Agglomerat-Inhibitoren. Die Agglomerat-Inhibitoren sind in der Kondensatphase des Mehrphasengemisches im allgemeinen zumindest teilweise löslich. Unter bedingt öllöslich werden hier Stoffe verstanden, von denen mindestens 1 g in 1l Solvent Naphtha klar löslich ist.

In einer bevorzugten Ausführungsform der Erfindung werden Copolymere verwendet, die
A) 1 bis 99 mol% Struktureinheiten der Formel (1) und
B) 1 bis 99 mol-% Struktureinheiten der Formel (2) 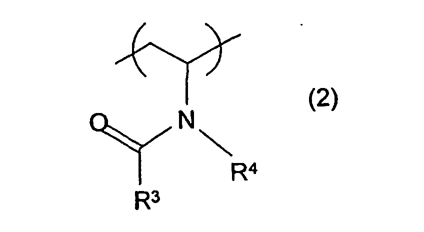
enthalten, worin R³ und R⁴ unabhängig voneinander Wasserstoff oder C₁-C₆-Alkyl bedeuten, oder unter Einschluss des Stickstoffatoms und der Carbonylgruppe einen Ring von 5, 6 oder 7 Ringatomen bilden.

Als Beispiele sind dabei unter anderem N-Vinylformamid (NVF), N-Vinylmethylformamid, N-Vinylmethylacetamid (VIMA), N-Vinylacetamid, N-Vinylpyrrolidon (NVP) und N-Vinylcaprolactam zu nennen. In einer bevorzugten Ausführungsform der Erfindung leiten sich die Struktureinheiten der Formel 2 von N-Vinylacetamid, N-Methyl-N-vinylacetamid, Vinylpyrrolidon und Vinylcaprolactam ab.

In einer weiteren bevorzugten Ausführungsform der Erfindung werden Copolymere verwendet, die sich von
A) 1 bis 99 mol-% Struktureinheiten der Formel (1),
B) 1 bis 99 mol-% Struktureinheiten der Formel (2), und
C) 1 bis 99 mol-% bivalenten Struktureinheiten der Formel (3) 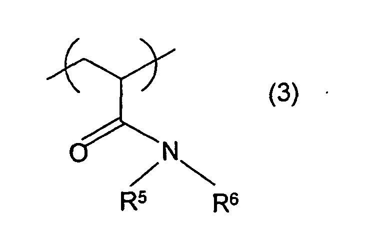
ableiten, worin R⁵ und R⁶ unabhängig voneinander Wasserstoff, C₁-C₆-Alkyl oder C₁-C₆-Cycloalkyl bedeuten, oder unter Einschluss des Stickstoffatoms einen Ring mit 5, 6 oder 7 Ringatomen bilden, und worin die Struktureinheiten A), B) und C) sich zu 100 mol-% ergänzen.

Die bevorzugten Mengen an Struktureinheiten A), B) oder C) liegen für alle Ausführungsformen bei 5 bis 95, insbesondere 20 bis 80 mol-%.

R³/R⁴ und R⁵/R⁶ enthalten vorzugsweise jeweils zusammen mindestens 1, insbesondere mindestens 2 Kohlenstoffatome.

Die Struktureinheiten der Formel 3 leiten sich vorzugsweise von Acrylsäure, Acrylamid, N-Alkylacrylamiden, N,N-Dialkylacrylamiden, 2-Dimethylaminomethacrylat, N-Acryloylpyrrolidin, N-Acryloylmorpholin und N-Acryloylpiperidin ab.

Die Herstellung der erfindungsgemäß zu verwendenden Polymere erfolgt durch radikalische Polymerisation der Monomeren unter Verwendung eines geeigneten Radikalstarters bei Temperaturen zwischen 50 und 150°C. Das Molekulargewicht dieser Kammpolymere kann sich im Bereich von 1000 bis 10⁶ g/mol bewegen, bevorzugt sind aber Molekulargewichte zwischen 1000 und 40000 g/mol.

Als alkoholisches Lösungsmittel eignen sich wasserlösliche Monoalkohole, wie z.B. Propanole, Butanole sowie oxethylierte Monoalkohole wie Butylglycol, Isobutylglycol und Butyldiglycol. Es bilden sich nach der Polymerisation im allgemeinen klare Lösungen.

Die Polymere können alleine oder in Kombination mit anderen bekannten Gashydratinhibitoren eingesetzt werden. Im allgemeinen wird man dem zur Hydratbildung neigenden System soviel des erfindungsgemäßen Gashydratinhibitors zusetzen, dass man unter den gegebenen Druck- und Temperaturbedingungen eine ausreichende Inhibierung erhält. Die erfindungsgemäßen Gashydratinhibitoren werden im allgemeinen in Mengen zwischen 0,01 und 2 Gew.-% (bezogen auf das Gewicht der wässrigen Phase), entsprechend 100 - 20.000 ppm, vorzugsweise 0,02 bis 1 Gew.-% verwendet. Werden die erfindungsgemäßen Gashydratinhibitoren in Mischung mit anderen Gashydratinhibitoren verwendet, so beträgt die Konzentration der Mischung 0,01 bis 2 bzw. 0,02 bis 1 Gew.-% in der wässrigen Phase.

### Beispiele

Zur Untersuchung der inhibierenden Wirkung der Polymere wurde ein Stahlrührautoklav mit Temperatursteuerung, Druck- und Drehmomentaufnehmer mit 450 ml Innenvolumen benutzt. Für Untersuchungen zur kinetischen Inhibierung wurde der Autoklav mit destillierten Wasser und Gas im Volumenverhältnis 20: 80 gefüllt, für Untersuchungen der Agglomeratinhibierung wurde zusätzlich Kondensat zugegeben. Abschließend wurden 90 bar Erdgas aufgedrückt.

Ausgehend von einer Anfangstemperatur von 17,5°C wurde innerhalb 2 h auf 2°C abgekühlt, dann 18 h bei 2°C gerührt und innerhalb von 2 h wieder auf 17,5°C aufgeheizt. Dabei wird zunächst eine Druckabnahme gemäß der thermischen Kompression des Gases beobachtet. Tritt während der Unterkühlzeit die Bildung von Gashydratkeimen auf, so verringert sich der gemessene Druck, wobei ein Anstieg des gemessenen Drehmoments und leichter Anstieg der Temperatur zu beobachten ist. Weiteres Wachstum und zunehmende Agglomeration der Hydratkeime führt ohne Inhibitor schnell zu einem weiteren Anstieg des Drehmomentes. Beim Aufwärmen des Gemisches zerfallen die Gashydrate, so dass man den Anfangszustand der Versuchsreihe erreicht.

Als Maß für die inhibierende Wirkung des Polymers wird die Zeit vom Erreichen der Minimaltemperatur von 2°C bis zur ersten Gasaufnahme (T_{ind}) bzw. die Zeit bis zum Anstieg des Drehmomentes (T_{agg}) benutzt. Lange Induktionszeiten bzw. Agglomerationszeiten weisen auf eine Wirkung als kinetischer Inhibitor hin. Das im Autoklaven gemessene Drehmoment dient dagegen als Größe für die Agglomeration der Hydratkristalle. Bei einem guten Antiagglomerant ist das Drehmoment, das sich nach Bildung von Gashydraten aufbaut, gegenüber dem Blindwert deutlich verringert. Im Idealfall bilden sich schneeartige, feine Hydratkristalle in der Kondensatphase, die sich nicht zusammenlagern und somit nicht zum-Verstopfen der zum Gastransport und zur Gasförderung dienenden Installationen führen.

### Synthese der Polymere

### Beispiel 1:

In einem 250 ml Vierhalskolben wurden 5,0 g Methacrylsäure-(EO)₅-oleylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 45 g (0,32 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 2:

In einem 250 ml Vierhalskolben wurden 10,0 g Methacrylsäure-(EO)₅-oleylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 40 g (0,29 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 3:

In einem 250 ml Vierhalskolben wurden 25,0 g Methacrylsäure-(EO)₅-oleylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 25 g (0,18 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 4:

In einem 250 ml Vierhalskolben wurden 5,0 g Methacrylsäure-(EO)₈-oleylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 45 g (0,29 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 5:

In einem 250 ml Vierhalskolben wurden 25,0 g Methacrylsäure-(EO)₈-oleylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 25 g (0,18 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 6:

In einem 250 ml Vierhalskolben wurden 5,0 g Methacrylsäure-(EO)₃-butylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 45 g (0,29 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 7:

In einem 250 ml Vierhalskolben wurden 25,0 g Methacrylsäure-(EO)₃-butylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 25 g (0,18 mol) Vinylcaprolactam und in 25 g Butylglykol über 1,5 Stunden zugetropft. Nach de, Zugabe wurde die Reaktionslösung weitere 30 min. erhitzt, dann nochmals 0,5 g Starter zugegeben und zwei Stunden bei 150°C nachgerührt.

### Beispiel 8:

In einem 250 ml Vierhalskolben wurden 45,0 g Methacrylsäure-(EO)₃-butylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 5 g (0,04 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 9:

In einem 250 ml Vierhalskolben wurden 25,0 g Methacrylsäure-(EO)₅-butylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 25 g (0,18 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 10:

In einem 250 ml Vierhalskolben wurden 25,0 g Methacrylsäure-(EO)₅-methylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 25 g (0,18 mol) Vinylcaprolactam und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 11:

In einem 250 ml Vierhalskolben wurden 25,0 g Methacrylsäure-(EO)₅-butylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 25 g (0,23 mol) Vinylpyrrolidon und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 12:

In einem 250 ml Vierhalskolben wurden 25,0 g Methacrylsäure-(EO)₅-methylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 25 g (0,23 mol) Vinylpyrrolidon und in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 13:

In einem 250 ml Vierhalskolben wurden 25,0 g Methacrylsäure-(EO)₅-methylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 10,0 g (0,10 mol) N-Vinyl-N-metylacetamid und 15 g (0,13 mol) Dimethylaminomethacrylamid in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Beispiel 14:

In einem 250 ml Vierhalskolben wurden 25,0 g Methacrylsäure-(EO)₅-methylester und 1,0 g Dilaurylperoxid als Radikalstarter in 75 g Butylglykol vorgelegt und unter Stickstoffspülung auf 150°C erwärmt. Dazu wurde eine N₂-gespülte Lösung aus 10,0 g (0,07 mol) N-Vinyl-caprolactam und 15 g (0,13 mol) Dimethylmethacrylamid in 25 g Butylglykol über 1,5 Stunden zugetropft. Nach der Zugabe wurde die Reaktionslösung weitere 30 min. erhitzt, dann nochmals 0,5 g Starter zugegeben und zwei Stunden bei 150°C nachgerührt.

### Testergebnisse

Zusammensetzung des verwendeten Erdgases:
Methan 87,6 %, Ethan 1,26 %, Propan 0,08 %, Butan 0,02 %, Kohlendioxid 0,35 %, Stickstoff 10,61 %.
Unterkühlung unter die Gleichgewichtstemperatur der Hydratbildung bei 65 bar: 7°C, Unterkühlung bei 90 bar: 8,5°C.
Als Vergleichssubstanz wurde eine Lösung von Polyvinylcaprolactam in Butylglykol herangezogen, Molekulargewicht 5000 g/mol.

| Polymerbeispiel | Dosierung ppm | Druck p (bar) | T_{ind} (h) | T_{agg}(h) |
|---|---|---|---|---|
| Blindwert | - | 65 | 0 | 0 |
| Blindwert | - | 90 | 0 | 0 |
| 1 | 5000 | 90 | 6,5 | 7,0 |
| 2 | 5000 | 90 | 6,4 | 7,8 |
| 4 | 5000 | 90 | 4,6 | 4,6 |
| 6 | 5000 | 90 | 12,6 | 12,8 |
| 6 | 5000 | 65 | > 16,0 | - |
| 7 | 5000 | 90 | 10,1 | 11,0 |
| 9 | 5000 | 90 | 13,0 | 13,4 |
| 9 | 5000 | 65 | 13,9 | 14,4 |
| 12 | 5000 | 90 | 4,6 | 5,0 |
| 13 | 5000 | 90 | 0,2 | 0,5 |
| Vergleich 1 | 5000 | 90 | 0,2 | 0,2 |
| Vergleich 2 | 2500 | 90 | 5,2 | 5,2 |

Wie aus den obigen Testresultaten zu erkennen ist, wirken die erfindungsgemäßen Produkte, vor allem die mit kurzen Alkylresten, als kinetische Hydratinhibitoren und zeigen eine deutliche Verbesserung gegenüber dem Stand der Technik.

Um die Wirkung als Agglomeratinhibitoren zu prüfen, wurde im oben verwendeten Testautoklaven Wasser und Testbenzin vorgelegt (20 % des Volumens im Verhältnis 1:2) und bezogen auf die Wasserphase 5000 ppm des jeweiligen Additivs zugegeben.

Bei einem Autoklavendruck von 90 bar und einer Rührgeschwindigkeit von 5000 U/min wurde die Temperatur von anfangs 17,5°C innerhalb 2 Stunden auf 2°C abgekühlt, dann 16 Stunden bei 2°C gerührt und wieder aufgewärmt. Dabei wurde die Induktionszeit bis zum Auftreten der ersten Hydratbildung und das dabei auftretende Drehmoment am Rührer gemessen, das ein Maß für die Agglomeration der Gashydrate ist.

| Polymerbeispiel | T_{ind} (h) | Mₘₐₓ(Ncm) |
|---|---|---|
| Blindwert | 0,1 | 15,9 |
| 3 | 12,9 | 0,4 |
| 5 | > 16 | n.b. |
| 8 | 9,4 | 2,1 |
| 10 | 8,2 | 3,2 |
| 11 | 10,2 | 1,5 |
| 14 | 8,6 | 3,7 |

Wie aus diesen Beispielen zu ersehen ist, waren die gemessenen Drehmomente im Vergleich zum Blindwert trotz heftiger Hydratbildung stark reduziert. Dies spricht für eine deutliche agglomeratinhibierende Wirkung der erfindungsgemäßen Produkte. Überraschenderweise wiesen die Produkte unter den Versuchsbedingungen zusätzlich auch eine deutliche Wirkung als kinetische Inhibitoren auf. Bei Beispiel 5 wurde keine Hydratbildung beobachtet.

## Patentansprüche

1. Verwendung von Polymeren, enthaltend zwischen 1 und 100 mol-% bivalente Struktureinheiten der Formel 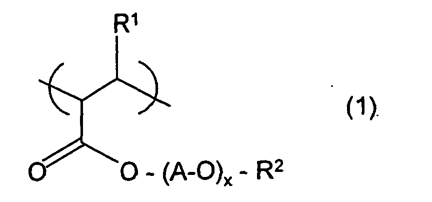 worin
R¹ Wasserstoff oder C₁-C₆-Alkyl,
R² C₁-C₂₄-Alkyl, C₂-C₂₄-Alkenyl oder ein C₆-C₁₈-Arylrest, der mit einer C₁-C₁₂-Alkylgruppe substituiert sein kann,
A gleichartige oder verschiedene C₂-C₄-Alkylenreste und,
x eine ganze Zahl von 2-40 bedeuten,
in Mengen von 0,01 bis 2 Gew.-%, bezogen auf die Wasserphase, als Gashydratinhibitoren.

2. Verwendung von Copolymeren gemäß Anspruch 1, die
A) 1 bis 99 mol-% Struktureinheiten der Formel (1) und
B) 1 bis 99 mol-% bivalente Struktureinheiten der Formel (2) 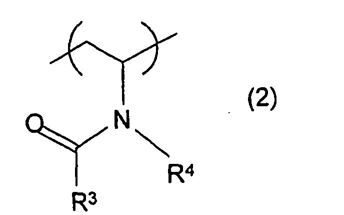 enthalten, worin R³ und R⁴ unabhängig voneinander Wasserstoff oder C₁-C₆-Alkyl bedeuten, oder unter Einschluss des Stickstoffatoms und der Carbonylgruppe einen Ring von 5, 6 oder 7 Ringatomen bilden.

3. Verwendung gemäß Anspruch 2, worin sich die Struktureinheiten der Formel 2 von N-Vinylacetamid, N-Methyl-N-vinylacetamid, Vinylpyrrolidon und Vinylcaprolactam ableiten.

4. Verwendung von Copolymeren gemäß Anspruch 2 und/oder 3, die sich von
A) 1 bis 99 mol-% Struktureinheiten der Formel (1),
B) 1 bis 99 mol-% Struktureinheiten der Formel (2), und
C) 1 bis 99 mol-% bivalenten Struktureinheiten der Formel (3) 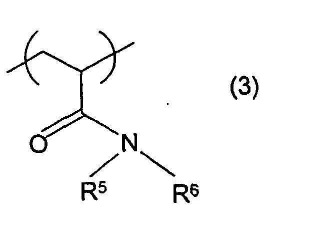
ableiten, worin R⁵ und R⁶ unabhängig voneinander Wasserstoff, C₁-C₆-Alkyl oder C₁-C₆-Cycloalkyl bedeuten, oder unter Einschluss des Stickstoffatoms einen Ring mit 5, 6 oder 7 Ringatomen bilden, und worin die Struktureinheiten A), B) und C) sich zu 100 mol-% ergänzen.

5. Verwendung nach einem oder mehreren der Ansprüche 1 bis 4, worin die Mengen an Struktureinheiten A), B) oder C) bei 20 bis 80 mol-% liegen.

6. Verwendung nach einem oder mehreren der Ansprüche 2 bis 5, worin R³/R⁴ und R⁵/R⁶ unabhängig voneinander mindestens 2 Kohlenstoffatome enthalten.

7. Verwendung gemäß einem oder mehreren der Ansprüche 4 bis 6, worin die Struktureinheiten der Formel 3 sich von Acrylsäure, Acrylamid, N-Alkylacrylamiden, N,N-Dialkylacrylamiden, 2-Dimethylaminomethacrylat, N-Acryloylpyrrolidin, N-Acryloylmorpholin und N-Acryloylpiperidin ableiten.

8. Verwendung nach einem oder mehreren der Ansprüche 1 bis 7, worin das Molekulargewicht der Polymere im Bereich von 1000 bis 10⁶ g/mol liegt.

## Claims

1. The use of polymers comprising from 1 to 100 mol% of bivalent structural units of the formula 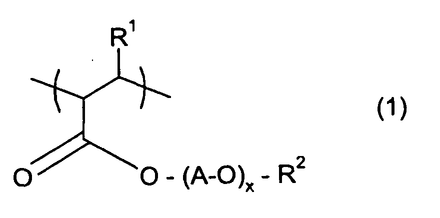 in which
R¹ is hydrogen or C₁-C₆-alkyl,
R² is C₁-C₂₄-alkyl, C₂-C₂₄-alkenyl or a C₆-C₁₈-aryl radical which may be substituted by a C₁-C₁₂-alkyl group,
A are identical or different C₂-C₄-alkylene radicals and
x is an integer from 2 to 40,
in amounts of from 0.01 to 2% by weight, based on the aqueous phase, as gas hydrate inhibitors.

2. The use of copolymers as claimed in claim 1, which contain
A) from 1 to 99 mol% of structural units of the formula (1) and
B) from 1 to 99 mol% of bivalent structural units of the formula (2) 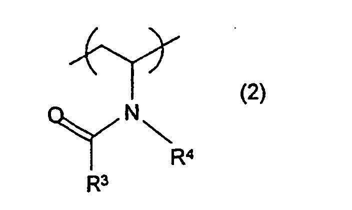
in which R³ and R⁴, independently of one another, are hydrogen or C₁-C₆-alkyl, or form a ring of 5, 6 or 7 ring atoms with inclusion of the nitrogen atom and of the carbonyl group.

3. The use as claimed in claim 2, wherein the structural units of the formula 2 are derived from N-vinylacetamide, N-methyl-N-vinylacetamide, vinylpyrrolidone and vinylcaprolactam.

4. The use of copolymers as claimed in claim 2 and/or 3, which are derived from
A) from 1 to 99 mol% of structural units of the formula (1),
B) from 1 to 99 mol% of structural units of the formula (2) and
C) from 1 to 99 mol% of bivalent structural units of the formula (3) 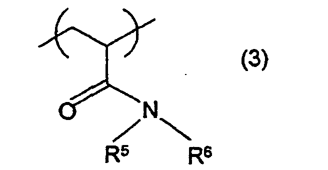
in which R⁵ and R⁶, independently of one another, are hydrogen, C₁-C₆-alkyl or C₁-C₆-cycloalkyl, or form a ring having 5, 6 or 7 ring atoms with inclusion of the nitrogen atom, and in which the structural units A), B) and C) sum to 100 mol%.

5. The use as claimed in one or more of claims 1 to 4, wherein the amounts of structural units A), B) or C) are from 20 to 80 mol%.

6. The use as claimed in one or more of claims 2 to 5, wherein R³/R⁴ and R⁵/R⁶, independently of one another, contain at least 2 carbon atoms.

7. The use as claimed in one or more of claims 4 to 6, wherein the structural units of the formula 3 are derived from acrylic acid, acrylamide, N-alkylacrylamides, N,N-dialkylacrylamides, 2-dimethylaminomethacrylate, N-acryloylpyrrolidine, N-acryloylmorpholine and N-acryloylpiperidine.

8. The use as claimed in one or more of claims 1 to 7, wherein the molecular weight of the polymers is in the range from 1000 to 10⁶ g/mol.

## Revendications

1. Utilisation de polymères, contenant entre 1 et 100 % en moles de motifs constitutifs divalents de formule : 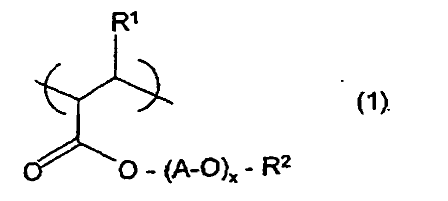 dans laquelle
R¹ est l'hydrogène ou un alkyle en C₁-C₆,
R² est un radical alkyle en C₁-C₂₄, un radical alcényle en C₂-C₂₄ ou un radical aryle en C₆-C₁₈, qui peut être substitué par un groupe alkyle en C₁-C₁₂,
A désigne des radicaux alkylènes en C₂-C₄ identiques ou différents et,
x désigne un nombre entier allant de 2 à 40, dans des quantités allant de 0,01 à 2 % en poids, par rapport à la phase aqueuse, en tant qu'inhibiteurs d'hydrate de gaz.

2. Utilisation de copolymères selon la revendication 1, qui contiennent :
A) de 1 à 99 % en moles de motifs constitutifs de formule (1) et
B) de 1 à 99 % en moles de motifs constitutifs divalents de formule (2) 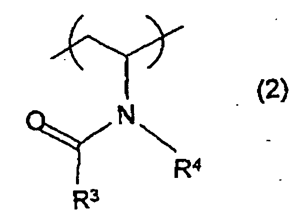
dans laquelle R³ et R⁴ désignent, indépendamment l'un de l'autre, l'hydrogène ou un alkyle en C₁-C₆, ou conjointement avec l'atome d'azote et le groupe carbonyle, forment un cycle de 5, 6 ou 7 chaînons.

3. Utilisation selon la revendication 2, dans laquelle les motifs constitutifs de formule 2 sont dérivés du N-vinylacétamide, du N-méthyl-N-vinylacétamide, de la vinylpyrrolidone et du vinylcaprolactame.

4. Utilisation de copolymères selon la revendication 2 et/ou 3, qui sont dérivés de :
A) 1 à 99 % en moles de motifs constitutifs de formule (1),
B) 1 à 99 % en moles de motifs constitutifs de formule (2), et
C) 1 à 99 % en moles de motifs constitutifs divalents de formule (3) 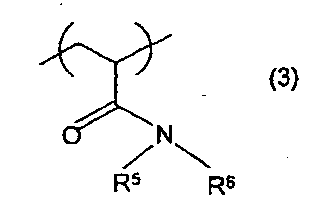 et C) se complètent jusqu'à obtenir 100 % en moles.
dans laquelle R⁵ et R⁶ désignent, indépendamment l'un de l'autre, l'hydrogène, un alkyle en C₁-C₆ ou un cycloalkyle en C₁-C₆, ou conjointement avec l'atome d'azote, forment un cycle ayant 5, 6 ou 7 chaînons, et dans laquelle les motifs constitutifs A), B)

5. Utilisation selon l'une ou plusieurs des revendications 1 à 4, dans laquelle les quantités de motifs constitutifs A), B) ou C) vont de 20 à 80 % en moles.

6. Utilisation selon l'une ou plusieurs des revendications 2 à 5, dans laquelle R³/R⁴ et R⁵/R⁶, indépendamment les uns des autres, contiennent au moins 2 atomes de carbone.

7. Utilisation selon l'une ou plusieurs des revendications 4 à 6, dans laquelle les motifs constitutifs de formule 3 sont dérivés de l'acide acrylique, de l'acrylamide, des N-alkylacrylamides, des N,N-dialkylacrylamides, du 2-diméthylamino-méthacrylate, de la N-acryloylpyrrolidine, de la N-acryloylmorpholine et de la N-acryloylpipéridine.

8. Utilisation selon l'une ou plusieurs des revendications 1 à 7, dans laquelle la masse moléculaire des polymères se situe dans la plage allant de 1000 à 10⁶ g/mole.
